# EUROPEAN PATENT SPECIFICATION

(11) **EP 3 046 007 B1**
(45) Date of publication and mention of the grant of the patent: **27.03.2019**
(21) Application number: 15151214.2
(22) Date of filing: 15.01.2015
(51) Int. Cl.: G06F 3/01, H04M 1/725, G06F 21/60, G06F 21/31

(54) **Method, apparatus and computer program product for enabling communication between devices based on eye contact**
Verfahren, Vorrichtung und Computerprogrammprodukt zur Ermöglichung von Kommunikation zwischen Vorrichtungen auf Basis von Blickkontakt
Procédé, appareil et produit programme d'ordinateur pour permettre une communication entre dispositifs sur base d'un contact visuel

(43) Date of publication of application: 20.07.2016
(73) Proprietor: Nokia Technologies Oy, 02610 Espoo (FI)
(72) Inventor: Reponen, Erika, 33100 Tampere (FI); Jokela, Tero, 33820 Tampere (FI)
(74) Representative: Nokia EPO representatives

(56) References cited:
- EP-A1- 2 610 708
- WO-A2-2012/037290
- US-A1- 2011 159 813
- US-A1- 2013 042 296

## Description

### TECHNOLOGICAL FIELD

The present invention relates generally to device communication, and more particularly, to a method, apparatus and computer program product for enabling communication between devices based on eye contact.

### BACKGROUND

The use of modern computing technology facilitates communication amongst individuals. Users of personal computers, mobile devices, and the like can communicate by email, instant message, chat room, screen or file sharing interfaces, and the like.

The advance of mobile computing technology has led to user devices becoming common place in every aspect of life. Some individuals carry mobile phones, or even wear mobile smart devices such that the mobile technology is accessible at any given moment and in every aspect of life, such a work, social settings, errand running, and the like. Users may wish to communicate with other users they encounter such that data and information may be transmitted electronically via their respective mobile devices.

WO2012/037290 A2 discloses an eyepiece, wherein physical contact with the skin, such as a handshake with another person or some other physical contact with a conductive or a non-conductive device or object, may be sensed as a change in an electric field and either enable data transfer to or from the eyepiece or terminate data transfer. An instantaneous private network between two people may be generated with a contact, such as a handshake. Data may be transferred between an eyepiece of a user and a data receiver or eyepiece of the second user. Additional security measures may be used to enhance the private network, such as facial or audio recognition, detection of eye contact, fingerprint detection, biometric entry, and the like. In embodiments, an authentication facility may be able to detect the presence of a user's eye or head as the eyepiece is put on.

EP2610708 A1 discloses an information processing apparatus that receives, from another information processing apparatus, first displacement information; senses second displacement information corresponding to movement of the information processing apparatus; and establishes a connection with the another information processing apparatus based on a predetermined relationship between the first displacement information and the second displacement information.

US2011/159813 A1 discloses methods for pairing devices to a group, which include initiating a plurality of wireless devices for communication with a base computing system; then, receiving signals indicative of setting of each of the plurality of wireless devices in pairing mode; then detecting a physical tap between two or more of the plurality of wireless devices, the physical tap setting a pairing of the wireless devices to a group for communication with the base computing system.

US2013/042296 A1 discloses a see-through, augmented reality display device system, wherein a digital content item may be represented by a three-dimensional virtual object displayed by the device system. A user can hold the virtual object in some examples, and transfer a right to the content item represented by the virtual object by handing the object to another user within a defined distance, who indicates acceptance of the right based upon one or more physical actions, including taking hold of the transferred object and making eye contact between the users.

### BRIEF SUMMARY

A method, apparatus, and computer program product are therefore provided for enabling communication between devices based on eye contact. A method is provided that includes receiving an indication of eye contact between two users, and receiving an indication of an action performed by the two users. In response to the indication of the eye contact and the indication of the action, the method comprises including the two users in a group and enabling communication between respective devices of at least the two users in the group. The action comprises a first movement performed by a first of the two users and a second movement performed by the second of the two users, and the second movement comprises at least one of mirror image or mimic of the first movement.

In some embodiments, the action is a predefined action associated with the group. In some examples, the method further includes receiving an indication of a selected type of action to be associated with the group. In some examples, the method includes, in response to the indication of the eye contact, providing a confirmation of the eye contact to be provided via at least one user interface, and, in response to the indication of the action, providing a confirmation of the inclusion in the group to be provided.

In some embodiments, at least one of the two users is included in another group, wherein the other group is associated with a different action. In some examples, the group is created ad hoc and the action is an ad hoc action.

In some embodiments, the method further comprises receiving an indication of a subsequent performance of the action, and in response to the indication of the subsequent performance of the action, causing at least one user to be removed from the group. In some embodiments, at least one of the devices is a head worn device.

An apparatus is also provided. The apparatus comprises means for performing any of the above methods.

A computer program product is also provided. The computer program product includes at least one non-transitory computer-readable storage medium having computer-executable program code instructions stored therein, the computer-executable program code instructions for performing any of the above methods.

### BRIEF DESCRIPTION OF THE DRAWINGS

Having thus described certain example embodiments of the present invention in general terms, reference will hereinafter be made to the accompanying drawings which are not necessarily drawn to scale, and wherein:
Figure 1 is a block diagram of an apparatus according to an example embodiment of the present invention;
Figure 2 is a flowchart of operations according to an example embodiment;
Figures 3A-3E are illustrations of a user interacting with an apparatus according to an example embodiment;
Figures 4A and 4B are example user interfaces according to an example embodiment; and
Figure 5 is an illustration of two users interacting with an apparatus according to an example embodiment.

### DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

As defined herein, a "computer-readable storage medium," which refers to a physical storage medium (e.g., volatile or non-volatile memory device), may be differentiated from a "computer-readable transmission medium," which refers to an electromagnetic signal.

Many device users communicate with each other based on pre-defined knowledge of user identification, such as email addresses, screen names, and user ids. Prior knowledge of another user's method of communication may be needed to establish a connection with the other user's device. Permission may need to be granted for security and privacy reasons. For example, some local area networks (LAN) may be configured such that only a predefined list of users or devices may communicate with each other over the network.

Some methods of enabling secure communication among co-located user devices are available. For example, Bluetooth™ technology enables communication between two devices in close proximity, but is often used to facilitate communication between two devices in possession of the same person once configured for connectivity. In some examples, associating two or more devices such that the devices may communicate with each other may be referred to as device binding, coupling, and/or pairing. However, many methods for device binding rely on pre-configuration of groups and setting access permissions. Some of device binding or coupling technology requires users to select other users and grant permission via a user interface, or require pressing buttons, touching devices, or aligning the devices together simultaneously.

A method, apparatus and computer program product are therefore provided in accordance with an example embodiment of the present invention for enabling communication between devices based on eye contact. In this regard, two users within close proximity may make eye contact with each other. At least one of the users making eye contact may perform an action, such as a head nod, head tilt, mouth movement, wave, and/or the like. In response to the eye contact and the action, communication between two respective devices may be enabled, such that data may be transferred between the two devices. Embodiments provided herein therefore provide for ad hoc group creation and device binding. Users in a multiple user scenario need not pre-configured permissions and access for other users. Rather, the respective devices may perform operations described herein in response to the users' physical actions in order to provide ad hoc group binding.

According to example embodiments, any number of groups may be established, with any number of users within a group. Any member of a group may communicate with any other member of the same group. A group may be defined or started by a leader, and the leader may identify a specific type of action to be associated with the group such that making eye contact with a group member, and performing the associated type of action results in inclusion in the group and enablement of communication within the group. Different groups may have different associated actions.

Users belonging to the group, or group members, may have devices that become configured to communicate with other devices belonging to group members. This configuration enabling devices to communicate with one another may be referred to as coupling, pairing, binding, and/or association. Some methods for group collaboration are known but require tedious configuration by users. Example embodiments described herein provide for easy, efficient, and ad hoc group creation and association.

For example, one user(s) may wear a head worn, or other wearable user device, such as data glasses. The user may see another user and make eye contact with the other user who wears a similar device. The eye contact may be detected by either or both devices. The data glasses of either or both users may also provide a user interface perceivable by either or both users. For example, the wearer of the data glasses may see visual feedback on an inner facing user interface. A user may see indicators on another user's device, such as colored or flashing lights on the other user's data glasses (e.g., an outer facing edge or surface) as confirmation of device binding or inclusion in the group.

As another example, non-wearable devices such as a mobile device may also be used. Embodiments may detect user's eye movements with cameras, motion sensors, and/or the like. Communication may be enabled directly, such as by near field communication (NFC) and/or radio transmission, for example. Additionally or alternatively, communication may be facilitated over a network and/or via a server. Example embodiments are described in more detail hereinafter.

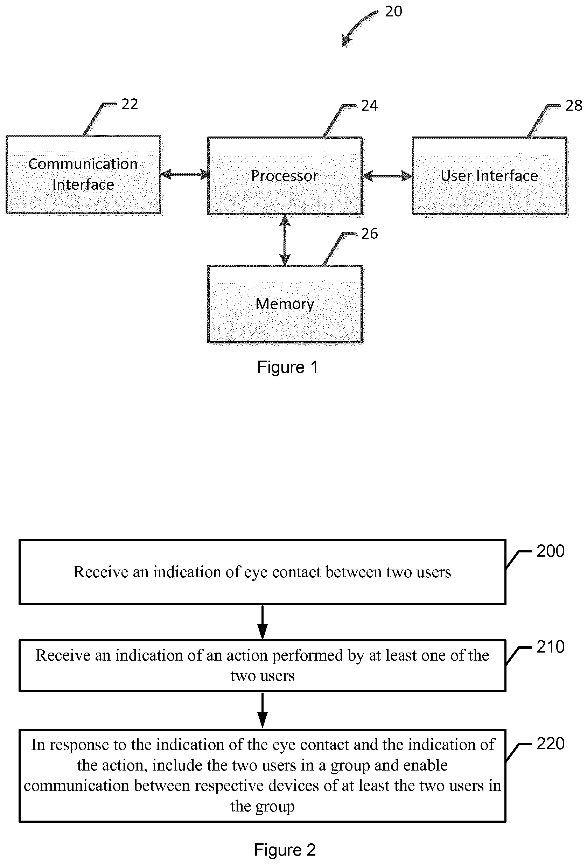

Figure 1 is a schematic diagram of an example apparatus configured for performing any of the operations described herein. Apparatus 20 is an example embodiment that may be embodied by or associated with any of a variety of computing devices that are configured for enabling communication between devices. For example, the computing device may be a wearable device, such as data glasses, or another type of mobile device, such as a personal computer, laptop, personal digital assistant (PDA), mobile telephone, smart phone, smart watch, tablet computer, camera or any combination of the aforementioned and other types of voice and text communications systems. Alternatively, the computing device may be separate from, but in communication with the wearable device or other mobile device that is configured to detect eye contact between the users. For example, the apparatus may be a server as described below.

Still further, the apparatus may be embodied by or associated with a plurality of computing devices that are in communication with or otherwise networked with one another such that the various functions performed by the apparatus may be divided between the plurality of computing devices that operate in collaboration with one another. For example, a user may wear a pair of data glasses to facilitate enablement of communication between their smart phone or lap top to another user's device. In some examples, at least two apparatuses 20 may be enabled to communicate with each other, in accordance with example embodiments described herein. The two or more apparatuses 20 may be of different types. For example, data glasses worn by one user could be enabled to communicate with a smart phone of another user.

The apparatus 20 may be equipped with any number of sensors (not shown), such as an accelerometer, and/or gyro meter. Any of the sensors may be used to sense information regarding a user's eye movement and/or gaze, as well as movement of any part of a user's body. The sensor may also provide positioning or orientation of the device. In some example embodiments, such sensors may be implemented in a wearable device or user interface component (e.g., data glasses), and the information detected may be transmitted to the apparatus 20, such as by NFC including, but not limited to, Bluetooth™ communication, or the like. Therefore, according to the example mentioned above, apparatus 20 may therefore comprise data glasses and/or receive data from data glasses (such as by NFC) such that communication is enabled between apparatus 20 and another user device, belonging to another user.

The apparatus 20 may include, be associated with, or may otherwise be in communication with a communication interface 22, processor 24, a memory 26 and a user interface 28. In some embodiments, the processor (and/or co-processors or any other processing circuitry assisting or otherwise associated with the processor) may be in communication with the memory device via a bus for passing information among components of the apparatus. The memory device may be non-transitory and may include, for example, one or more volatile and/or non-volatile memories. In other words, for example, the memory device may be an electronic storage device (for example, a computer readable storage medium) comprising gates configured to store data (for example, bits) that may be retrievable by a machine (for example, a computing device like the processor). The memory device may be configured to store information, data, content, applications, instructions, or the like for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

According to example embodiments memory 26 may store computer program code that enables communication between apparatus 20 and another device, as described herein according to example embodiments. The computer program code may be provided as a factory install, or downloaded by a user of apparatus 20, for example.

As noted above, the apparatus 20 may be embodied by a computing device. However, in some embodiments, the apparatus may be embodied as a chip or chip set. In other words, the apparatus may comprise one or more physical packages (for example, chips) including materials, components and/or wires on a structural assembly (for example, a circuit board). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 24 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 24 may be configured to execute instructions stored in the memory 26 or otherwise accessible to the processor. Alternatively or additionally, the processor may be configured to execute hard coded functionality. As such, whether configured by hardware or software methods, or by a combination thereof, the processor may represent an entity (for example, physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device (for example, the computing device) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

The apparatus 20 of an example embodiment may also include or otherwise be in communication with a user interface 28. The user interface may include a touch screen display, a speaker, physical buttons, LED (light emitting diode) lights, lenses on a pair of data glasses, and/or other input/output mechanisms. In an example embodiment, the processor 24 may comprise user interface circuitry configured to control at least some functions of one or more input/output mechanisms. The processor and/or user interface circuitry comprising the processor may be configured to control one or more functions of one or more input/output mechanisms through computer program instructions (for example, software and/or firmware) stored on a memory accessible to the processor (for example, memory device 24, and/or the like). In this regard, the apparatus 20 may enable a user to initiate enablement of communication with another device via the user interface 28.

The apparatus 20 of an example embodiment may also include a communication interface 22 that may be any means such as a device or circuitry embodied in either hardware or a combination of hardware and software that is configured to receive and/or transmit data from/to other electronic devices in communication with the apparatus, such as by NFC, described above.

Additionally or alternatively, the communication interface 22 may be configured to communication over a network, such as a local area network (LAN), cellular data network, and/or the Internet. In this regard, the communication interface 22 may include, for example, an antenna (or multiple antennas) and supporting hardware and/or software for enabling communications with a wireless communications network. Additionally or alternatively, the communication interface 22 may include the circuitry for interacting with the antenna(s) to cause transmission of signals via the antenna(s) or to handle receipt of signals received via the antenna(s). In some environments, the communication interface 22 may alternatively or also support wired communication.

Having now described an example embodiment of apparatus 20, Figure 2 provides operations that may be performed by apparatus 20 according to example embodiments.

As shown by operation 200, apparatus 20 may include means, such as processor 24, memory 26, communication interface 22, user interface 28 and/or the like, for receiving an indication of eye contact between two users. Data transmitted from one or more devices may be analyzed by processor 24 to determine that eye contact between two users has occurred. For example, data glasses or another similar wearable device may utilize sensors to determine orientation of the device. When two devices are oriented such that the processor 24 determines the users are making eye contact, the indication may be generated.

Still further, one or more user devices may detect, such as with a camera, a user's eyes. The eyes may be tracked such that a subject of the user's gaze is identified. With the same or another user device, eyes of a second user may be tracked. Data regarding two users' gazes may therefore be analyzed to determine eye contact has occurred, and the indication may be generated and/or received by apparatus 20. It will be appreciated that embodiments may implement any combination of the above described methods for determining eye contact has occurred. For example, a pair of data glasses worn by a first user may analyze the first user's gaze, while a hand held user device of a second user may track the second user's gaze with a camera or motion sensors. Either the data glasses, hand held device, or both, may receive information regarding the other user's gaze, and generate an indication of the eye contact. Thus, a single device of one example embodiment may independently determine that eye contact has occurred, while in another example embodiment, two or more devices, such as a respective device of each user, may communicate, either with one another or with another computing device to permit the determination that eye contact has occurred. Even further, a third device that is implemented as apparatus 20, such as a server, may receive indications from two user devices so as to determine eye contact is made.

It will be appreciated that many methods for analyzing at least two users' gaze may be utilized to generate the indication of eye contact received by apparatus 20.

In some embodiments, apparatus 20 may include a server configured to generate the indication of eye contact. For example, any device configured to operate according to example embodiments may transmit data regarding the user's gaze to the server. The server may collect and/or track eye positioning information relating to a plurality of users. When two users are determined to have made eye contact, the indication of the eye contact may be generated.

In some embodiments, a server may not be needed, but two user devices may be configured to generate the indication of eye contact. For example, one or more user devices may be configured to transmit and/or receive information regarding users' gaze as described above (e.g., with sensors, cameras, and a communication interface as described above). One or both user devices implemented as apparatus 20 may therefore determine that the eye contact has been made.

As shown by operation 210, apparatus 20 may include means, such as processor 24, memory 26, communication interface 22, user interface 28 and/or the like, for receiving an indication of an action performed by at least one of the two users. In some examples, only one user may be required to perform an action for the indication of the action to be generated. In some embodiments, both or all of the at least two users must perform the same type of action for the indication to be provided. Example actions are predefined and include a head nod, head tilt, winking of the eye, and/or any other movement, or action that may be performed by a user.

In some embodiments, the action must be performed within a threshold amount of time, such as within 10 seconds, of when the eye contact is made or the indication of eye contact is received to be considered as indication of inclusion of a new member to a group. This may ensure that unintentional actions are not misinterpreted by apparatus 20. In example embodiments in which both users are required to perform the action, the action must occur simultaneously or within a threshold amount of time of each other (for example, within 5 seconds), for the new member to join the group. Requiring both users to perform the action may ensure that an unwelcome user is not accidently permitted to join a group based on eye contact alone. Similar to the detection of eye contact, the user actions may be monitored by a server, and/or by one or both user devices.

As shown by operation 220, apparatus 20 may include means, such as processor 24, memory 26, communication interface 22, user interface 28 and/or the like, for in response to the indication of the eye contact and the indication of the action, include the two users in a group and enable communication between respective devices of each user in the group. For example, the apparatus 20 may configure a group of users based on identification of user devices. The associated user devices belonging to or associated with a user may be configured such that in response to the user being included in a group, data from the respective user device(s) may be shared with and/or transmitted to other devices of users in the group.

For example, two families (e.g., two or more users) on a holiday trip together may share their photos in a shared album. A group of friends shopping in a mall may initially configure a group, and track the locations of each other as they shop in different locations. A group of hunters could configure a group with apparatus 20 to coordinate the hunting activity. Rescue workers arriving at an accident scene may wear data glasses to initiate communication with each other and share situational information.

The communication enabled between devices based on the eye contact of group members may be any type of electronic data communication. Prior to the enablement of communication in operation 220, two user devices may only be configured such that indications of eye contact and performance of user actions are communicated between the devices. However, upon execution of operation 220, additional communication is enabled. For example, in some embodiments, the communication may comprise transfer of data and/or files from one device to another. In some examples, one user of a group may share a display screen such that other users can view the display screen on their personal device. In some example, users of a group may collaborate on a shared user interface, where multiple users can provide input to an interface that is reflected for all users to see. In some examples, audio communication may additionally be enabled.

As yet another example, access to memory 26 of one or more respective user devices may be provided to other group members. In some examples, the communication may be facilitated by a server that is remote from the respective user devices. In such an example, the data may be routed via the server. The server may route the data such that it is provided to all group members, and/or only a subset of users as indicated by the user device from which the particular data originated, or a group leader, for example.

Still further, in some examples, the data may be transmitted directly between user devices. For example, the enablement of communication may reconfigure the apparatus 20 to allow for data transfer by NFC to other user devices in the group. It will be appreciated that a variety of implementations for enabling communication between group members may be provided such that additional data, in addition to data relating to a user's gaze and actions, may be transmitted among devices.

Any number of users may join a group, or a group may be limited to a predefined number of users. In some examples, only the leader (e.g., group creator) may add new members by performing the eye contact (and optionally the action along with the joining member). In some embodiments, however, the group may be configured such that any member may add new members.

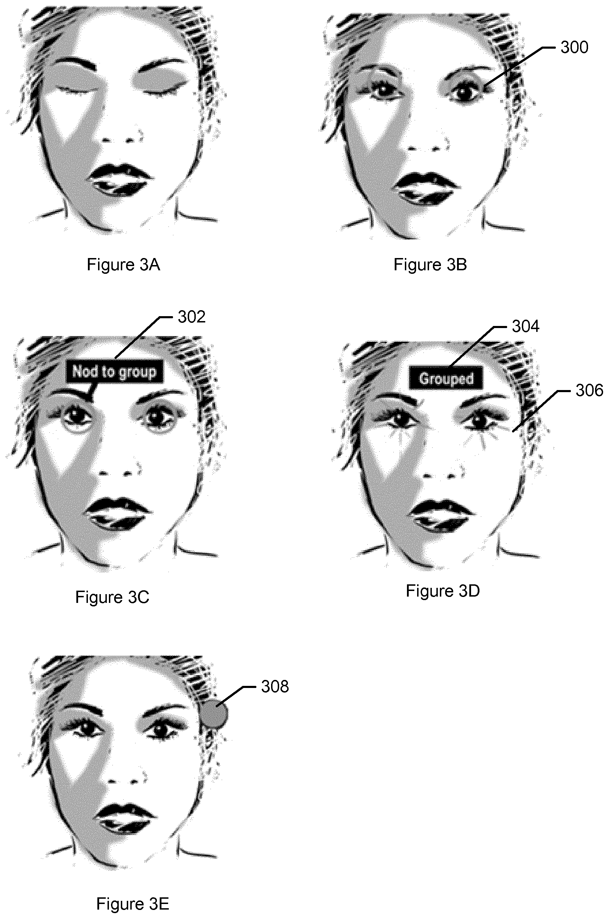

Figures 3A-3E illustrate a user of a device according to example embodiments. While the user device is not visible in the illustrations, it will be appreciated that the user of Figures 3A-3D wears data glasses or another wearable device, and information provided via the user interface of the data glasses is described below with respect to the illustrations. Figure 3A shows the user prior to making eye contact with another user.

As illustrated in Figure 3B, apparatus 20 may include means, such as processor 24 and/or user interface 28, for providing a confirmation of eye contact. The lit or colored circles 300 around the user's eyes may indicate to the user and/or another user that eye contact between the two users is confirmed. In some embodiments, the circles or other indication may be provided on both respective user devices when eye contact is made.

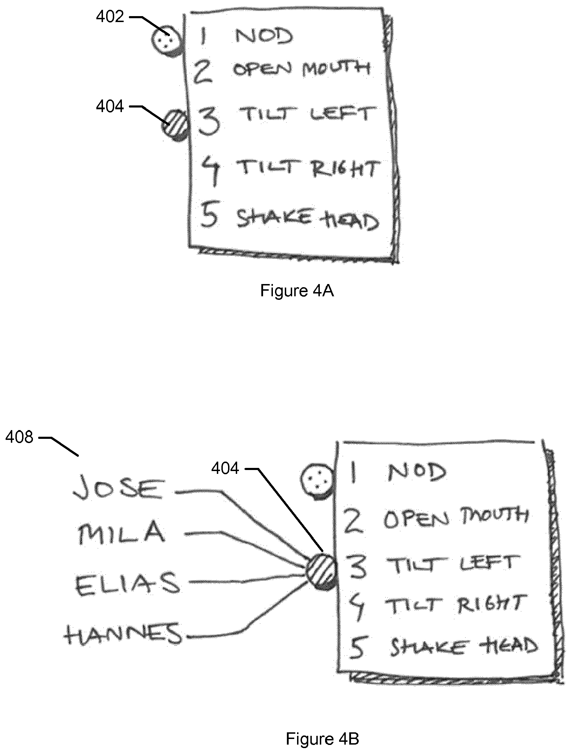

As illustrated in Figure 3C, apparatus 20 may include means, such as processor 24 and/or user interface 28, for prompting the user with a type of action, such as a predefined action or user configured action that should be performed by the user for the user to join a group. In this regard, the prompt 302, "nod to group" may be provided on user interface 28 such that it may be perceived by the user. For example, although the prompt 302 faces outward in Figure 3C, the prompt may be provided on an inner facing portion of the user interface 28 (e.g., lenses of the data glasses) such that user may view the message. Additionally or alternatively, a user may be prompted by audio indications of an action to be performed. User prompts and types of actions are described in further detail with regard to Figures 4A and 4B below.

As illustrated in Figures 3D and 3E, apparatus 20 may include means, such as processor 24 and/or user interface 28, for providing confirmation of inclusion in the group. For example, in Figure 3D, a message 304, "grouped" is provided to indicate to one or more users that the wearer of the device emitting the message is included in the group. The message may be displayed facing inward toward the user. Figure 3E illustrates a lit indicator 308 for other users to see as confirmation that the user has been included in the group. In some examples, multiple indicators (not shown), which may be illuminated in different colors or flashing patterns, may indicate inclusion in different groups.

Figures 4A and 4B are example user interfaces that may be displayed to a user according to example embodiments. For example, a group leader or another user may configure a new group. The user may select from a listing of predefined actions 1-5 such as, but not limited to, 1 - nod, 2 - open mouth, 3 - tilt left, 4 - tilt right, and 5 - shake head. Other users need to make eye contact with a group member, such as the group leader or another user, and perform the selected action to join the group. Indicator 402 indicates to a user that action 1 is associated with one group, and indicator 404 indicates to a user that action 3 is assigned to another group. To configure yet another group, the user should select one of the available actions 2, 4, or 5.

As illustrated in Figure 4B, apparatus 20 may comprise means, such as processor 24 and/or user interface 28, for causing display or provision of users currently included in a group. In response to selection of indicator 404, the apparatus 20 may cause display of the names of users 408 that are a part of the associated group. In some examples, a user viewing the list of users need not be included in the group, but the list may include actions being utilized in a close proximity to the user, so that a user does not configure a new group associated with a same action already associated with another group in the area. Additionally, a user can see current group members to determine whether or not they would like to join the group. In some embodiments, the group members may be indicated on a map, timeline, or in other format.

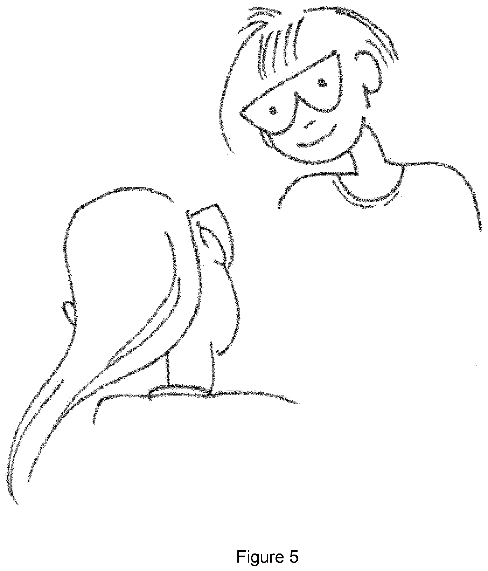

As illustrated in Figure 5, another example action that may be associated with a group is a "mirror image" action. In this regard, a user wanting to join a group must make eye contact with a group member and mimic or mirror an action the group member performs. The mirroring, in some examples, occurs while eye contact is maintained for the new member to join. In some embodiments, the mirroring of the action may occur within a threshold amount of time from when eye contact is established. A mirror image action of another user may comprise a similar movement but in the opposite direction of the user. As another example, the action may be mimicked in the same direction for a user to join a group.

In some examples, the mirror image action and/or mimicked action may allow for ad hoc group creation. In this regard, a user may need not pre-configure a group, nor select an action with which to associate a group. Rather two users may establish eye contact, and one user performs a mirror image action and/or mimicked action of the other user to establish connectivity between two devices. In this regard, the group and/or associated action is created on the fly, or ad hoc. The created action may be reused for other members to join, or other users may join the group in a similar manner by subsequent ad hoc actions, such as the mirror image action and/or mimicked action, which may differ each time a member joins. Additionally or alternatively, when a group is created ad hoc, the particular mirror image action and/or mimicked action may become associated with the group such that other users must perform the mirror image and/or mimicked image to join.

In some examples, apparatus 20 comprises means, such as processor 24, memory 26, and/or the like, for ungrouping an entire group, or removing individual users from the group. For example, removal may occur for an individual user by performing the eye contact and action associated with the group again, similar to as performed when joining the group. As yet another example, the user may perform the action while not making eye contact with another user, to be ungrouped from the group, or perform a reverse or opposite action of the associated action of the group so as to "undo" the joining operation.

Furthermore, in some embodiments, a user may ungroup via user interface 28, even if group members are not near. For example, a user may select an indication on a user interface, such as by selecting the dot 308 in Figure 3E, and selecting "ungroup" or a similar command from a menu. In some examples, a user can add themself to a group, or another user, without establishing eye contact or being near other group members, such as by selection via user interface 28. In some examples, a group member may dismantle an entire group such that the group can no longer communicate. In some embodiments, such a feature may only be exposed to the group leader.

Apparatus 20 may be further configured, such as with processor 24, memory 26, and/or user interface 28, such that when the action associated with a particular group occurs without an indication of eye contact occurring within a predefined threshold amount of time, information related to the group (e.g., member listing, group leader, start time, number of members, group name, purpose, etc.), may be provided.

Example embodiments provide for an easy, efficient and intuitive group formation. Enabling communication and device binding based on eye contact provides a natural method for users to interact. According to human nature, establishing eye contact with another individual is often a first step in starting a conversation or other communication. Example embodiments therefore adhere to the natural habits of users by also initiating communication between devices in response to an indication of eye contact between users.

Furthermore, embodiments are particularly advantageous for multi-user and multi-group scenarios. Users may initiate ad hoc group binding according to example embodiments provided herein such that group members may be added without tediously configuring a group and the group members. For users working in environments where accessing a personal computer is inconvenient, embodiments provided herein allow for efficient ad hoc group creation. Users who are actively working in a particular area (e.g., accident scene), can continue working on urgent tasks and allow other users to join without being interrupted. Enabling creation of multiple groups further allows users to selectively allow other individuals to access only the information the user is authorized to access. Alternative implementations may otherwise require users to be interrupted in their activities to bump devices, or provide precise spatial device alignment to initiate a connection. Example embodiments allow users to enable device communication without interrupting a task at hand.

As such, the method, apparatus and computer program product provide numerous technical advantages including the conservation of processing resources and the associated power consumption otherwise expended to support the display of information needed for a user to otherwise configure the apparatus 20 for group configuration and maintenance. For example, alternative implementations may rely on a centralized work station or web service to be accessed in order to add and remove group members and to configure permissions for particular users and devices. Enabling ad hoc group creation based on eye contact and performance of actions may limit the additional computational resources required, such as databases storing group information and user or device permission information.

As described above, Figure 2 illustrates a flowchart of operations of an apparatus 20, method and computer program product according to example embodiments of the invention. It will be understood that each block of the flowchart, and combinations of blocks in the flowchart, may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory 26 of an apparatus employing an embodiment of the present invention and executed by a processor 24 of the apparatus. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In some embodiments, certain ones of the operations above may be modified or further amplified. Furthermore, in some embodiments, additional optional operations may be included, some of which have been described above. Modifications, additions, or amplifications to the operations above may be performed in any order and in any combination.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A computer-implemented method comprising:
(200) receiving an indication of eye contact between two users of two respective communication devices (20);
(210) receiving an indication of an action performed by the two users, wherein the action comprises a first movement performed by a first of the two users and a second movement performed by the second of the two users;
the method being **characterised by**:
(220) in response to the indication of the eye contact and the indication of the action, including the two users in a group and enabling communication between respective devices of at least the two users in the group; and
the second movement comprising at least one of a mirror image or a mimicked image of the first movement.

2. The method according to claim 1, wherein the action is a predefined action associated with the group.

3. The method according to any of claims 1 or 2, further comprising:
receiving an indication of a selected type of action to be associated with the group.

4. The method according to any of claims 1 to 3 further comprising:
in response to the indication of the eye contact, providing a confirmation of the eye contact via at least one user interface; and
in response to the indication of the action, providing a confirmation of the inclusion in the group.

5. The method according to any of claims 1 to 4, wherein at least one of the two users is included in another group, wherein the other group is associated with a different action.

6. The method according to any of claims 1 to 5, wherein the group is created ad hoc and the action is an ad hoc action.

7. The method according to any of claims 1 to 6, further comprising:
receiving an indication of a subsequent performance of the action; and
in response to the indication of the subsequent performance of the action, causing at least one user to be removed from the group.

8. The method according to any of the claims 1 to 7, wherein at least one of the devices is a head worn device.

9. The method of any preceding claim, wherein the first and second movements comprise at least one of a head nod, a head tilt, and winking of the eye.

10. A computer program product comprising at least one non-transitory computer-readable storage medium having computer-executable program code instructions stored therein, the computer-executable program code instructions comprising program code instructions to perform the method of any preceding claim.

11. An apparatus (20) comprising means (22, 24, 26, 28) for performing the method of any of claims 1 to 9.

## Patentansprüche

1. Computerimplementiertes Verfahren, umfassend:
(200) Empfangen einer Anzeige eines Augenkontakts zwischen zwei Benutzern von zwei Kommunikationsgeräten (20) ;
(210) Empfangen einer Anzeige einer Aktion, die von den zwei Benutzern ausgeführt wird, wobei die Aktion eine erste Bewegung umfasst, die von einem ersten der zwei Benutzer ausgeführt wird, und eine zweite Bewegung, die von dem zweiten der zwei Benutzer ausgeführt wird; wobei das Verfahren **dadurch gekennzeichnet ist, dass**:
(220) als Antwort auf die Anzeige des Augenkontakts und die Anzeige der Aktion die zwei Benutzer in eine Gruppe aufgenommen werden und die Kommunikation zwischen den jeweiligen Geräten von mindestens den zwei Benutzern in der Gruppe ermöglicht wird; und
die zweite Bewegung mindestens ein Spiegelbild oder ein nachgeahmtes Bild der ersten Bewegung umfasst.

2. Verfahren nach Anspruch 1, wobei die Aktion eine vordefinierte Aktion ist, die der Gruppe zugeordnet ist.

3. Verfahren nach einem der Ansprüche 1 oder 2, darüber hinaus Folgendes umfassend:
Empfangen einer Anzeige eines ausgewählten Aktionstyps, der der Gruppe zugeordnet werden soll.

4. Verfahren nach einem der Ansprüche 1 bis 3, darüber hinaus Folgendes umfassend:
als Antwort auf die Anzeige des Augenkontakts die Bereitstellung einer Bestätigung des Augenkontakts über mindestens eine Benutzerschnittstelle; und
als Antwort auf die Anzeige der Aktion die Bereitstellung einer Bestätigung der Aufnahme in die Gruppe.

5. Verfahren nach einem der Ansprüche 1 bis 4, wobei mindestens einer der zwei Benutzer zu einer anderen Gruppe gehört, wobei die andere Gruppe einer anderen Aktion zugeordnet ist.

6. Verfahren nach einem der Ansprüche 1 bis 5, wobei die Gruppe ad-hoc erstellt wird und die Aktion eine ad-hoc-Aktion ist.

7. Verfahren nach einem der Ansprüche 1 bis 6, darüber hinaus Folgendes umfassend:
Empfangen einer Anzeige einer nachfolgenden Durchführung der Aktion; und
als Antwort auf die Anzeige der nachfolgenden Durchführung der Aktion, dass mindestens ein Benutzer aus der Gruppe entfernt wird.

8. Verfahren nach einem der Ansprüche 1 bis 7, wobei mindestens eines der Geräte ein am Kopf getragenes Gerät ist.

9. Verfahren nach einem der vorhergehenden Ansprüche, wobei die erste und zweite Bewegung mindestens ein Nicken des Kopfes, ein Neigen des Kopfes oder ein Augenzwinkern umfasst.

10. Computerprogrammprodukt, das mindestens ein nicht flüchtiges computerlesbares Speichermedium umfasst, in dem computerausführbare Programmcodeanweisungen gespeichert sind, wobei die computerausführbaren Programmcodeanweisungen Programmcodeanweisungen umfassen, um das Verfahren nach einem der vorhergehenden Ansprüche auszuführen.

11. Gerät (20), umfassend Mittel (22, 24, 26, 28) zum Durchführen des Verfahrens nach einem der Ansprüche 1 bis 9.

## Revendications

1. Procédé mis en oeuvre par ordinateur comprenant :
(200) la réception d'une indication d'un contact oculaire entre deux utilisateurs de deux dispositifs de communication respectifs (20) ;
(210) la réception d'une indication d'une action réalisée par les deux utilisateurs, dans lequel l'action comprend un premier mouvement effectué par un premier des deux utilisateurs et un second mouvement effectué par le second des deux utilisateurs ;
le procédé étant **caractérisé par** :
(220) à la suite de l'indication du contact oculaire et de l'indication de l'action, l'inclusion des deux utilisateurs dans un groupe et l'établissement d'une communication entre des dispositifs respectifs des deux, ou plus, utilisateurs dans le groupe ; et
le second mouvement comprenant une image miroir et/ou une image reproduite du premier mouvement.

2. Procédé selon la revendication 1, dans lequel l'action est une action prédéfinie associée au groupe.

3. Procédé selon l'une quelconque des revendications 1 et 2, comprenant en outre :
la réception d'une indication d'un type sélectionné d'action à associer au groupe.

4. Procédé selon l'une quelconque des revendications 1 à 3, comprenant en outre :
à la suite de l'indication du contact oculaire, la fourniture d'une confirmation du contact oculaire par le biais d'au moins une interface utilisateur ; et
à la suite de l'indication de l'action, la fourniture d'une confirmation de l'inclusion dans le groupe.

5. Procédé selon l'une quelconque des revendications 1 à 4, dans lequel au moins l'un des deux utilisateurs est inclus dans un autre groupe, dans lequel l'autre groupe est associé à une action différente.

6. Procédé selon l'une quelconque des revendications 1 à 5, dans lequel le groupe est créé ad hoc et l'action est une action ad hoc.

7. Procédé selon l'une quelconque des revendications 1 à 6, comprenant en outre :
la réception d'une indication d'une performance ultérieure de l'action ; et
à la suite de l'indication de la performance ultérieure de l'action, la provocation de la suppression d'au moins un utilisateur du groupe.

8. Procédé selon l'une quelconque des revendications 1 à 7, dans lequel au moins l'un des dispositifs est un dispositif porté sur la tête.

9. Procédé selon l'une quelconque des revendications précédentes, dans lequel les premier et second mouvements comprennent un hochement de la tête et/ou une inclinaison de la tête et/ou un clignement de l'oeil.

10. Produit-programme d'ordinateur comprenant au moins un support de stockage non transitoire lisible par un ordinateur dans lequel sont stockées des instructions de code de programme pouvant être exécutées par un ordinateur, les instructions de code de programme pouvant être exécutées par un ordinateur comprenant des instructions de code de programme pour réaliser le procédé selon l'une quelconque des revendications précédentes.

11. Appareil (20) comprenant des moyens (22, 24, 26, 28) pour réaliser le procédé selon l'une quelconque des revendications 1 à 9.
